Europäisches Patentamt

European Patent Office

Office européen des brevets

(19)

(11) Publication number: **0 107 984**
**B1**

(12) **EUROPEAN PATENT SPECIFICATION**

(45) Date of publication of patent specification: **07.01.88**

(51) Int. Cl.⁴: **G 11 B 5/70**

(21) Application number: **83306618.6**

(22) Date of filing: **31.10.83**

(54) **Magnetic recording medium.**

(30) Priority: **29.10.82 JP 190275/82**

(43) Date of publication of application: .
**09.05.84 Bulletin 84/19**

(45) Publication of the grant of the patent:
**07.01.88 Bulletin 88/01**

(84) Designated Contracting States:
**DE FR GB**

(56) References cited:
**EP-A-0 075 991**
**EP-A-0 083 666**
**EP-A-1 043 882**
**WO-A-82/01099**
**CH-A- 364 368**
**DE-A-2 743 916**
**DE-A-3 217 212**
**FR-A-2 185 827**
**FR-A-2 382 325**
**GB-A-2 044 789**
**GB-A-2 071 145**

The file contains technical information
submitted after the application was filed and
not included in this specification

(73) Proprietor: **KONISHIROKU PHOTO INDUSTRY
CO. LTD.**
**No. 26-2, Nishishinjuku 1-chome Shinjuku-ku
Tokyo 160 (JP)**

(72) Inventor: **Nakamura, Issei**
**669-6 Ishikawa-cho**
**Hachioji-shi Tokyo (JP)**
Inventor: **Itozawa, Kenji**
**2-5-19 Owada-cho**
**Hachioji-shi Tokyo (JP)**

(74) Representative: **Ellis-Jones, Patrick George
Armine et al**
**J.A. KEMP & CO. 14 South Square Gray's Inn
London WC1R 5EU (GB)**

EP 0 107 984 B1

**Description**

This invention is concerned with improvements in magnetic recording media and particularly with magnetic recording media capable of making magnetic recordings of high density and high resolution in present video systems.

In order to improve the recording density and sensitivity of a magnetic recording medium, a non-magnetic support such as polyethylene terephthalate or cellulose triacetate base is coated with a magnetic layer comprising ferromagnetic powder and a binder which have been kneaded together. The ferromagnetic powder has a large residual magnetic flux density Br, a large ratio of the Br to Bm (the saturation magnetic flux density) and a large coercive force Hc. Known binders include vinyl chloride-vinyl acetate copolymer, butyl acrylate-acrylonitrile copolymer, cellulose resin and polyurethane resin.

It is advantageous from the viewpoint of magnetic characteristics such as Br/Bm, Br and Hc to use a metal magnetic powder or cobalt adsorbed iron oxide such as Co adsorbed $\gamma$—$Fe_2O_3$ as the ferromagnetic powder. Conventional magnetic powder comprises acicular crystals and if these are more finely granulated to increase the resolution powder, crystals having a longer axis of 0.3 to 0.9 µm and a shorter axis of 0.05 to 0.1 µm in length, with a ratio of longer to shorter axis, i.e., the acicular ratio, of the order of 5 to 10 are obtained. Meanwhile, Hc in these conventional metal magnetic powder is increased to the order of 43.8—59.7 kA/m (550 to 750 Oe), as they are granulated thereby saturating the head of a typical video deck on the market that is, Hc is too great for the materials to be used with present video systems.

In magnetic powder of conventional Co adsorbed iron oxide having a high acicular ratio, such as Co-adsorbed $\gamma$—$Fe_2O_3$, the saturation magnetization σs is decreased as the powder is finely granulated and the magnetic grains with a high acicular ratio are easily snapped off causing an uneven distribution of Hc in the magnetic layer, resulting in image transfer between laminated magnetic layers.

Crystals having a high acicular ratio are required to strengthen the oriented magnetic field because of the necessity of increasing the degree of orientation. As a result, the grains are stuck together, so that the surface of the magnetic layer is roughened. These crystals also tend to decrease in saturation magnetization σs and not be suitable for a high sensitivity and high density recording as they become finer. It is well known that the decrease in saturation magnetization σs of Co-adsorbed iron oxide can be retarded if the amount of Co is increased. It is however undesirable in practice because other problems are produced by such an increase. If there is too much Co, thermal instabilization and pressure instabilization are caused by the change in the magnetic characteristics. Moreover, Co is expensive.

JP—B—32408/1982 discloses a coaxial circles type or a spiral type recording system using ferromagnetic powder whose ratio of average longer axis to average shorter axis is from 1.2 to 3.0. However, this type of magnetic recording means has only been used so far on e.g. the so-called floppy-disks, and Hc of well-known ferromagnetic powder is merely 1.6—31.8 kA/m (20 to 400 Oe). ,

In the systems adopted in the present coaxial circles type or spiral type magnetic recording media, Hc is prescribed in a limited range. In the publication described above there is no suggestion that the Hc of ferromagnetic powders could be improved or that recording media for systems requiring a wider range of Hc could be produced. Ferromagnetic powder having a higher Hc has been demanded for new systems in this type of field; however, $\gamma$—$Fe_2O_3$ such as disclosed in the above described Publication is not satisfactory. In addition, known conventional Co-containing $\gamma$—$Fe_2O_3$ is not very thermally stable and has not successfully been used in practice.

Further, the more scattering there is, the more dust and dirt are apt to adhere to the coating surface of a magnetic layer to cause the so-called "Drop-out" phenomenon. JP—A—98135/1982 does not describe any proper Hc but merely describes a recording media containing $\gamma$—$Fe_2O_3$ having an extremely low coercive force of 22.3—26.3 kA/m (280 to 330 Oe), or Fe-powder having a normal Hc of 71.6—83.6 kA/m (900 to 1050 Oe).

In addition, PCT WO82/00261 discloses a magnetic recording element made of a metal oxide of a metallic dope such as, preferably, Co, having an acicular ratio of not higher than 15 and preferably of 2 to 8 and an Hc of not lower than 35.8 kA/m (450 Oe) and preferably of not lower than 51.7 kA/m (650 Oe). However, such magnetic recording media using a metal doped metal oxide such as Co dope $\gamma$—$Fe_2O_3$ has thermal stability problems.

EP—A—43882 discloses a magnetic recording element which involves the use of magnetic particles which may, comprise ferromagnetic iron oxide particles doped with Co possessing inter alia, an Ra between 1.3 and 4.5 and an Hc between 43.8 and 63.7 kA/m (550 and 800 Oe), these particles being characterised in that they have spherically symmetrical intrinsic magnetic properties such that the coercivities are substantially the same in three orthogonal directions.

It is an object of the invention to provide a high sensitivity and high density magnetic recording medium.

The inventors have studied various magnetic recording media and particularly high density and high resolution magnetic recording media to be applied to present video systems, and have produced a high density and high output magnetic recording medium which has not be obtainable in the prior art. This recording medium is obtained by lowering the acicular ratio of Co-adsorbed iron oxide or metallic magnetic powder and by giving an appropriate Hc to the finely granulated magnetic powder.

This invention substantially reduces the disadvantages of using Co-absorbed iron oxide magnetic

**0 107 984**

powder or metallic magnetic powder with present video systems by increasing Hc of the metallic magnetic powder or by decreasing the saturation magnetization $\sigma$s of adsorbed $\gamma$—$Fe_2O_3$. That is to say, the coercive force Hc is within the range of 43.8 to 63.7 kA/m (550 to 800 Oe) and the saturation magnetization Br is not decreased.

This invention provides a magnetic recording medium which comprises, on a support, a magnetic layer containing ferromagnetic powder comprising ferromagnetic iron oxide particles, characterised in that the iron oxide particles possess a surface layer with cobalt adsorbed thereon, the average grain size of said particles being not more than 0.5 μm, the ratio of the major axis to the minor axis (acicular ratio) Ra and the coercive force Hc thereof satisfying the following formulae:

$$1.3 \leqq Ra \leqq 4.5, \text{ and } 43.8 \leqq Hc \leqq 63.7 \text{ kA/m } (550 \leqq Hc \leqq 800 \text{ Oe})$$

The grain size of the ferromagnetic powder is not larger than 0.5 μ and more preferably, not larger than 0.3 μm for the purpose of high density recording.

As a Co-adsorbed iron oxide, Co-adsorbed $\gamma$—$Fe_2O_3$ is preferred. The amount of Co-adsorbed is preferably 0.5 to 30% by weight and more preferably 2.5 to 30% by weight. If the amount of Co-adsorbed is less than 0.5% by weight, Hc runs short, and if more than 30% by weight, thermal instability becomes apparent and the head of a video desk is also apt to be worn out.

Ferromagnetic powder having the desired characteristics can be obtained using known procedures. For example US Patent 4202871 describes how various axial ratios can be obtained. The coercive force of a cobalt-adsorbed gamma ferric oxide, for instance, can be varied with the amount of cobalt adsorbed. For example, gamma ferric oxide may be dispersed in an aqueous alkaline solution in which varying amounts of cobalt dichloride, cobalt sulphate and ferrous sulphate, for instance, are dissolved and the dispersion oxidised in the air.

As the materials of a support base (hereinafter called a support), there may be used polyethylene terephthalate; a polyester such as polyethylene-2,6-napthalate; a polyolefin such as polypropylene; a cellulose derivative such as cellulose triacetate or cellulose diacetate; a plastic such as polycarbonate; a non-magnetic metal such as Al or Zn; or a ceramic.

The thickness of the support is generally of the order of about 3 to 100 μm and preferably 5 to 50 μm in the form of film or sheet, and of the order of 30 to 10 mm in the form of disk or card. When a drum is used it is cylindrical, and the shape will be determined in accordance with the particular recorder to be used.

The support may also be back-coated on the opposite surface to that coated with a magnetic layer, with e.g. an image transfer to prevent an electric charge building up on that side of the support.

Such back-coatings are described in the following patent specifications; U.S. Patent Nos. 2,804,401, 3,293,066, 3,617,378, 3,062,676, 3,734,772, 3,476,596, 2,643,048, 2,803,556, 2,887,462, 2,923,642, 2,997,451, 3,007,892, 3,041,196, 3,115,420, 3,116,688 and the like.

The form of the support may be e.g. a tape, sheet, card, disk or drum. Various materials may be selected according to the form required.

As the binders, conventionally well-known thermoplastic resins, thermosetting resins, reactive resins, electron-beams irradiation setting resins or the mixture thereof may be used.

As the thermoplastic resins, there are generally used those having a softening temperature of not higher than 150°C, an average molecular weight of 10,000 to 200,000 and a degree of polymerization of about the order of 200 to 2,000; for example, vinyl chloride-vinyl acetate copolymer, vinyl chloride-vinylidene chloride copolymer, vinyl chloride-acrylonitrile copolymer, an ester acrylate-acrylonitrile copolymer, an ester acrylate-vinylidene chloride copolymer, an ester acrylate-styrene copolymer, an ester methacrylate-acrylonitrile copolymer, an ester methacrylate-vinylidene chloride copolymer, an ester methacrylate-styrene copolymer, urethane elastomer, polyvinyl fluoride, vinylidene chloride-acrylonitrile copolymer, acrylonitrile-butadiene copolymer, polyamide resin, polyvinyl butyral, a cellulose derivative such as cellulose acetate butyrate, cellulose diacetate, cellulose triacetate, cellulose propionate or nitrocellulose, styrene-butadiene copolymer, polyester resin, chlorovinyl ether — an ester acrylate copolymer, amino resin, various synthetic rubber types of thermoplastic resin, or mixture thereof.

These resins are described in JP—B— 6877/1962, 12528/1964, 19282/1964, 5349/1965, 20907/1965, 9463/1966, 14059/1966, 16985/1966, 6428/1967, 11621/1967, 4623/1968, 15206/1968, 2889/1969, 17947/1969, 18232/1969, 14020/1970, 14500/1970, 18573/1972, 22063/1972, 22064/1972, 22068/1972, 22069/1792, 22070/1972 and 27886/1973; and U.S. Patent Nos. 3,144,352, 3,419,420, 3,499,789 and 3,713,887.

The molecular weight of such thermoplastic resins or reaction type resins is usually not more than 200,000 when they are in the form of coating liquid and is made infinite by the reaction such as condensation or addition after they are coated and dried. Inter alia, it is preferred that such resins not soften or fuse until they are thermally decomposed. Particular examples include a phenol resin, polyurethane setting type resin, urea resin, melamine resin, alkyd resin, silicone resin, acryl type reactive resin, mixture of a macromolecular polyester resin and isocyanate prepolymer, mixture of methacrylate copolymer and diisocyanate, prepolymer, mixture of polyester polyol and polyisocyanate, mixture of urea formaldehyde resin/a low molecular glycol/a macromolecular diol/triphenyl methane isocyanate, polyamine resin, and mixtures thereof.

These resins are described in JP—B—8103/1964, 9779/1965, 7192/1966, 8016/1966, 14275/1966, 18179/

3

1967, 12081/1968, 28023/1969, 14501/1970, 24902/1970, 13103/1971, 22067/1972, 22072/1972, 22073/1972, 28045/1972, 28048/1972, and 28922/1972, and U.S. Patent Nos. 3,144,353, 3,320,090, 3,437,510, 3,597,273, 3,781,210, and 3,781,211.

Electron-beam irradiation setting type resins include an unsaturated prepolymer such as those of maleic anhydride type, urethane acryl type, polyester acryl type, polyether acryl type, polyurethane acryl type or polyamide acryl type and multifunctional monomers include those of ether acryl type, urethane acryl type, phosphate acryl type, aryl type and hydrocarbon type.

These binders are used independently or in combination, and additives may be added if necessary.

The proportion of ferromagnetic powder to binders is generally from 5 to 400 parts by weight, and preferably 10 to 200 parts by weight of the binder to 100 parts by weight of the ferromagnetic powder.

If too much binder is used in the magnetic recording medium, the recording density of the recording medium is lowered. If too little is used the strength of a magnetic layer is weakened so that unfavorable phenomena such as such as powder-off and deterioration of durability will occur.

The make of ferromagnetic recording media more durable, various hardening agents such as polyisocyanate, may be contained in the magnetic layer.

Such polyisocyanates include the addition product of diisocyanate and tervalent polyol, or a decarboxylated compound of diisocyante pentamer/3 moles of diisocyanate/water.

Examples of such materials include the addition product of 3 moles of tolylene diisocyanate/1 mole of trimethylol propane, addition product of 3 moles of metaxylylene diisocyanate/1 mole of trimethylol propane, tolylenediisocyanate pentamer, pentamer comprising 3 moles of tolylene diisocyanate/2 mole of hexamethylene diisocyanate and the decarboxylated product obtainable by reaching 3 moles of hexamethylene diisocyanate with 1 mole of water. These may readily be prepared on an industrial scale.

Magnetic layers comprising the ferromagnetic powder, the described binders, and optionally hardening agent, may also contain, an additive such as a dispersing agent, coupling agent, lubricant, abrasive or antistatic agent.

As dispersing agents, may be used a fatty acid having 8 to 18 carbon atoms, such as caprylic acid, capric acid, lauric acid, myristic acid, palmitic acid, stearic acid, oleic acid, elaidic acid, linolic acid or linolenic acid, which are represented by R—OOOH, wherein R represents a saturated or unsaturated hydrocarbon group having 7 to 17 carbon atoms; a metallic soap comprising an alkali metal of an above descrbed fatty acid such as Li, Na, K, or an alkaline earth metal such as Mg, Ca, Ba. A higher alcohol having not less than 12 carbon atoms or e.g. a sulfate may also be used. These dispersing agents may be used independently or in combination are added within the range of 1 to 20 parts by weight to 100 parts by weight of the ferromagnetic-powder.

These dispersing agents are described in JP—B—28369/1964, 17945/1969, and 1500/1973, and U.S. Patent Nos. 3,587,993, and 3,470,021.

As coupling agents for dispersing the finely powdered ferromagnetic powder examples include isopropyl triisostearoyl titanate, isopropyl tridecyl benzene sulfonyl titanate, isopropyl tri(dioctyl pyrophosphate) titanate, tetraisopropyl bis(dioctyl phosphite)titanate, tetraoctyle bis(ditridecyl phosphite) titanate, tetra(2,2-diallyloxymethyl-1-butyl) bis(di-tridecyl phosphite) titanate, bis(dioctyl pyrophosphate) oxyacetage titanate and bis (dioctyl pyrophosphate) ethylene titanate. The ferromagnetic powder may be treated in advance or the dispersant may be added into a magnetic paint.

As lubricants, there may be used silicon oil, carbon black, graphite, carbon black graft polymer, molybdenum disulfide, tungsten disulfide, a fatty acid ester, i.e., a wax, comprising a monobasic fatty acid having 12 to 16 carbon atoms and a monovalent alchohol having 21 to 23 carbon atoms. These lubricants are generally added in from 0.2 to 20 parts by weight thereof to 100 parts by weight of the ferromagnetic powder. These lubricants are described in JP—B— 23889/1968, 81543/1968; U.S. Patent Nos. 3,470,021, 3,492,235, 3,497,411, 3,523,086, 3,625,760, 3,630,772, 3,634,253, 3,642,539 and 3,687,725; IBM Technical Disclosure Bulletin, vol. 9, No. 7, p. 779 (Dec. 1966) and Electronik 1961, No. 12, p. 380.

Examples of abrasives which may be used include fused alumina, silicon carbide, chromium oxide, corundum, artificial corundum, diamond, artificial diamond, garnet and emery mainly comprising corundum and magnetite. These abrasives usually have an average particle size of 0.05 to 5 μm and more preferably, 0.1 to 2 μm. They are generally in an amount from of 1 to 20 parts be weight to 100 parts by weight of the powder. These abrasives are described in JP—A— 115510/1974; U.S. Patent Nos. 3,007,807, 3,041,196 and 3,687,725; British Patent No. 1,145,349; and DE—C—853,211.

Antistatic agents, which may be used include electroconductive powder such as graphite, carbon black, tin oxide-antimonium oxide type compounds, tin oxide-titanium oxide-antimonium oxide type compounds and carbon black graft polymer; natural surface active agents such as saponin; nonionic surface active agents such as the alkylene oxide, glycerol of glycidol type cationic surface active agents such as the higher alkyl-amine type, quaternary ammonium salt type, or heterocyclic type of pyridine, cationic surface active agents such as the phosphonium or sulfonium type, anionic surface active agents containing an acid radical such as carbonic acid, sulfonic acid, phosphoric acid, sulfate or phosphate; and amphoteric surface active agents such as the amino acid type, aminosulfonic acid type or sulfate or phosphate of aminoalcohol.

The surface active agents capable of serving as the above mentioned antistatic agents are described in e.g. U.S. Patent Nos. 2,271,623, 2,240,472, 2,288,226, 2,676,122, 2,676,924, 2,676,975, 2,691,566, 2,727,860, 2,730,498, 2,742,379, 2,739,891, 3,068,101, 3,158,484, 3,201,253, 3,210,191, 3,294,540, 3,415,649, 3,441,413, 3,442,654, 3,475,174 and 3,545,974; DE—A—1,942,665; British Patent Nos. 1,077,317, and 1,198,450; Ryohei Oda, "Synthesis and Application of Surface Active Agents", Maki Bookstore, Japan, 1964; A.M. Schwartz & J. W. Perry, "Surface Active Agents", Interscience Publication, Inc., 1958; J.P. Sisley, "Encylopedia of Surface Active Agents", vol. 2, Chemical Publishing Co., 1964; and "A Handbook of Surface Active Agents", 6th ed., Sangyo Tosho K.K., Dec. 20, 1966.

These surface active agents may be added independently or in combination. These surface active agents are used as antistatic agents, and there is also some instances where they are used with the other purposes of, for example, dispersing, improving the magnetic characteristics and lubricity, and serving as a coating aid.

As solvents for magnetic paints, or to be used in a magnetic paint coating process, there may be used solvents of the ketone type such as acetone, methylethyl ketone, methylisobutyl ketone or cyclohexanone; those of the alcohol type such as methanol, ethanol, propanol or butanol; those of the ester type such as methyl acetate, ethyl acetate, butyl acetate, ethyl lactate or glycol acetate monoethyl ether; those of the glycol ether type such as glycol dimethyl ether, glycol monoethyl ether or dioxane; those of the aromatic hydrocarbon type such as benzene, toluene or xylene; those of halogenated hydrocarbon type such as methylene chloride, ethylene chloride, carbon tetrachloride, chloroform or dichlorobenzene.

The ferromagnetic powder, binders and optional ingredients such as dispersing agents, lubricants, abrasives, antistatic agents and solvents are mixed and kneaded to prepare a magnetic paint.

When mixed by kneading, the abovementioned ferromagnetic powder and each of the above components are put into a kneading machine either simultaneously or one by one in order. For instance, in one embodiment of the process the above ferromagnetic powder is first added to a solution containing a dispersing agent and kneaded for a prescribed period. Then, each of the other components is added whilst kneading, and thus a magnetic paint is prepared.

When mixed by kneading and dispersing, various types of kneading machines may be used. For instance, double roller mill, triple roller mill, ball mill, pebble mill, sand grinder. Szegvari attriter, high-speed impeller dispersing machine, high-speed stone mill, high-velocity impact mill, disper-kneader, high speed mixer, homogenizer or ultrasonic dispersing machine may be used.

The technique of kneading-dispersion is described in T. C. Patton, "Paint Flow and Pigment Dispersion", John Willey & Sons, 1964, and in U.S. Patent Nos. 2,581,414 and 2,855,156.

As coating method for forming a magnetic layer by coating the above-mentioned magnetic paint on a support, methods such as air-knife coating, air-doctor coating, blade coating, reverse roll coating, gravure coating, transfer roll coating, kiss coating, cast coating, spray coating or squeeze coating can be used. Other methods may also be used and the details of such methods are described in "Coating Engineering", Asakura Bookstore, 1971.

The magnetic layer coated on a support in a coating method such as mentioned above maybe treated, if necessary, to orientate the ferromagnetic powder contained in the layer, and then the magnetic layer thus formed is dried. Also if necessary, the surface of the layer is processed to be smooth and is cut into a desired size to prepare a magnetic recording medium of the invention.

It is desired in this case that the oriented magnetic field is A.C. of D.C. or the order of about 0.05 to 0.35 T(500 to 3500 Gauss); the drying temperature is of the order of about 50 to 100°C; and the drying time is of the order of about 3 to 10 minutes.

The thus prepared magnetic recording media relating to the invention have the following advantages:

(1) The thickness of the magnetic layer can be reduced to, for example, 1.2 to 3.8 $\mu$m, the inside of a magnetic layer can be prevented from forming a diamagnetic field, and thus a higher density recording can be made as compared with those of conventional magnetic recording media because of the finely pulverised ferromagnetic powders.

(2) The distribution of Hc caused by the scattering of fragments of ferromagnetic powder is decreased and thus a less transferable magnetic recording medium can be prepared because the acicular ratio is low so that the ferromagnetic powder is rarely broken when the powder is dispersed.

(3) An oriented magnetic field of high strength is not needed to increase the degree of orientation and the roughness caused thereby on the surface of the magnetic layer can be reduced because of the low acicular ratio of the ferromagnetic powder.

(4) Not only is the signal-to-noise ration (S/N) excellent because of the finely pulverized ferromagnetic powder, but also the binder-to-ferromagnetic powder proportion can suitably be adjusted because of the high saturation magnetization $\sigma$s.

(5) A high output recording medium can be prepared.

(6) Binders having strong coating properties can be selected.

(7) The stability of thus prepared magnetic recording media can be excellent, because the tip (which is apt to be stained) of a highly active acicular crystal can be smaller than those of conventional ferromagnetic metal powder in which the acicular ratio is high.

(8) It is possible to apply the invention to present video systems because the acicular ratio is as low as 1.3 to 4.5, and Hc is 43.8—63.7 kA/m (550 to 800 Oe) and preferably 46.2—55.7 kA/m (580 to 700 Oe); and a high output magnetic recording medium can thereby be obtained because of a high saturation

**0 107 984**

magnetization σs such as originally displayed by a magnetic metal powder can be used, and

(9) Unexpectedly, the durability of a still image is excellent in comparison with conventional ones.

In the invention "Co-adsorbed iron oxide" is defined as iron oxide with matter adsorbed to the surface thereof. This can be prepared by a process in which Goethite is changed into γ-iron oxide, for example, by dehydration followed by reduction and oxidation and then the iron oxide product is mixed with an alkaline solution to add, e.g., $CoSO_4$ and $FeSO_4$ (or $CoSO_4$ only) to the iron oxide. Accordingly, the "Co-adsorbed" iron oxide used in the invention is different from the other cases such as the case of Co-doped or Co-singly coprecipitated from the viewpoint of Co-contained, and is also different from the case of the conventional "Co-contained iron oxide". For example, the case of Co-adsorbed iron oxide used in the invention if further different from the case of "Co-doped iron oxide" described in JP—A—501053/1982 and is still further different from the case of iron oxide coprecipitated with Co-ion at the final stage of the reaction of the growth of Goethite as described in Example 3 of JP—A—98135/1982. Compared with these known "Co-contained iron oxide" the "Co-adsorbed iron oxide" used in the present invention is superior in thermal stability, and thus an excellent magnetic recording medium can be provided.

Further, the abovementioned "fine pulverisation" means that the grain size of magnetic powder is made smaller, and in the invention the grain size thereof is not larger than 0.5 μm and preferably not larger than 0.3 μm for further higher density recording.

## DETAILED DESCRIPTION OF THE EMBODIMENTS

The following are the detailed description of the invention with reference to the control examples and the examples of the invention. The word, a "part" as used in the examples means a "part by weight".

### Examples 1—5

| | |
|---|---|
| Magnetic powder of Fe metals of which the acicular ratio is 3 and the grain size is 0.3 μm | 75 parts |
| VAGH | 5 parts |
| Polyurethane resin, "Estane-5701" mfd. by Goodrich Co. | 9 parts |
| Methylethyl ketone | 70 parts |
| Toluene | 60 parts |
| Cyclohexane | 5 parts |
| Tetraisopropyl bis (dioctyl phosphite)titanate | 1.5 parts |

The abovementioned composition was thoroughly mixed and dispersed, and the five parts of ."Colonate L" were added to the resulting dispersed mixture, and thus a magnetic paint was prepared by uniformly mixing. Thus obtained magnetic paint was coated onto one side of polyethylene terephthalate base of 12 μm in thickness so that the coating thickness can be 5 μm, with a magnetic field of 0.2 T (2000 Gauss) being applied thereto and drying.

Thus obtained sample of wide width was treated in a supercalender process and was then slitted into 12.65 mm each to obtain video-tapes as the control sample No. I—(1).

As the iron alloy magnetic powder in the abovementioned composition, Fe—Co—Ni magnetic powder in the configuration of the acicular ratios and the grain sizes of 4 and 0.2 μm; 4 and 0.3 μm; 2.5 and 0.3 μm; 3.5 and 0.3 μm and 4.2 and 0.2 μm; respectively, are used in place of those of the acicular ratio of 3 and the grain size of 0.3 μm. They were thoroughly mixedly dispersed by means of ball mill as were done similarly in the above case, and five parts of "Colonate L" were added thereto and were then uniformly mixed up. Thus obtained magnetic paints were coated respectively onto each one side of polyethylene terephthalate bases so that the coating thickness can be 5 μm with applying magnetic fields thereto and drying. Further, super-calender processes were applied respectively to prepare video tapes of 12.65 mm in width. Thus prepared video tapes were called Samples I—(1), I—(2), I—(3), I—(4), and I—(5), respectively.

Table 1 below shows the measurement results of the performance of the tapes of thus obtained Control Sample I—(0) and Samples I—(1), I—(2), I—(3), I—(4) and I—(5) obtained in Examples 1—5.

6

0 107 984

TABLE 1

| Performance / Sample | Ra | Grain size μm | −Hc kA/m (Oersted) | RF Output | Chrom. dB S/N | Gloss % |
|---|---|---|---|---|---|---|
| I—(0) | 8 | 0.4 | 83.6 (1050) | 0 | 0 | 148 |
| I—(1) | 3 | 0.3 | 46.2 (580) | +0.5 | +0.6 | 153 |
| I—(2) | 4 | 0.2 | 55.7 (700) | +1.0 | +2.2 | 168 |
| I—(3) | 2.5 | 0.3 | 51.7 (650) | +1.0 | +1.2 | 158 |
| I—(4) | 3.5 | 0.3 | 47.7 (600) | +0.7 | +0.7 | 157 |
| I—(5) | 4.2 | 0.2 | 59.7 (750) | +2.3 | +2.5 | 160 |

In the table,
(a) Radio frequency output
   RF output were measured at 4 MHz by means of a video deck for measuring RF output, and the results thereof are shown as the relative values to that of the output of Control Sample I—(0) that is taken as 0.
(b) Chrominance S/N
   Chrominance signal of 3.58 MHz was set at 0.714 Vp-p (voltage peak-to-peak) to make a picture recording by putting the chrominance signal into a brightness modulation signal, and the chrominance signal was solely taken out by reproducing the recorded picture to obtain the ratios of the effective values (S) to the noise levels (N) from which the level of the chrominance signal was removed. The ratios are exhibited by the unit of dB.
(c) Degrees of gloss (which were measured by Glossmeter GL—26D

Control Example

| | |
|---|---|
| Co-adsorbed-$\gamma$-$Fe_2O_3$ (Acicular ratio: 11; Grain size: 0.3 μm) | 75 parts |
| VAGH | 5 parts |
| "Estane 5701" mfd. by Goodrich Co. | 9 parts |
| Methylethyl ketone | 70 parts |
| Toluene | 60 parts |
| Cyclohexanone | 5 parts |
| Isopropyl tris(dioctyl pyrophosphate) titanate | 1.5 parts |

The abovementioned composition was thoroughly mixed and dispersed, and then five parts of "Colonate L" were added to the resulting dispersed mixture, and thus a magnetic paint was prepared by uniformly mixing. Thus obtained magnetic paint was coated onto one side of polyethylene terephthalate base of 12 μm in thickness so that the coating thickness can be 5 μm, with a magnetic field of 0.2T (2000 Gauss) being applied thereto and drying.
   Thus obtained sample of wide width was treated in a supercalender process and was then slitted into 12.7 mm to obtain video-tapes and the control sample No. II—(0).

Examples 1—5

| | |
|---|---|
| Co-adsorbed-$Fe_2O_3$ | 75 parts |
| VAGH | · 5 parts |
| "Estane 5701" mfd. by Goodrich Co. | 9 parts |
| Methylethyl ketone | 70 parts |
| Cyclohexanone | 5 parts |
| Isopropyl tris(dioctyl pyrophosphate) titanate | 1.5 parts |

7

The abovementioned compositions of which the acicular ratios of Co-adsorbed-$\gamma$-Fe$_2$O$_3$ powder were 4.2, 4, 3.5, 3 and 2.5, respectively were thoroughly mixedly dispersed by a ball mill and five parts of "colonate L" were added thereto and were then uniformly mixed up. Thus obtained magnetic paints were coated respectively onto each one side of polyethylene terephthalate bases with applying magnetic fields of 0.2T (2000 Gauss), and were then dried up so that the thickness can be 5 $\mu$m each. Thus obtained samples of wide width were treated in supercalender process and were then slitted into 12.65 mm in width to obtain video-tapes as the Control Samples No. II—(1), II—(2), II—(3), II—(4) and II—(5), respectively.

Table 2 below exhibits the measurement results of the tape performance i.e., Hc, RF outputs in dB, chrom S/N ratios and the degrees of gloss of Sample Nos. II—(1), II—(2), II—(3), II—(4) and II—(5) and Control Sample No. II—(0).

TABLE 2

| Performance / Sample | Ra | Grain size $\mu$m | −Hc kA/m (Oersted) | RF Output | Chrom. dB S/N | Gloss % |
|---|---|---|---|---|---|---|
| II—(0) | 11 | 0.3 | 54.1 (680) | 0 | 0 | 150 |
| II—(1) | 4.2 | 0.2 | 43.8 (550) | +0.9 | +0.8 | 163 |
| II—(2) | 4 | 0.3 | 46.2 (580) | +0.9 | +0.5 | 148 |
| II—(3) | 3.5 | 0.3 | 51.7 (650) | +1.3 | +0.8 | 168 |
| II—(4) | 3 | 0.3 | 50.1 (630) | +1.5 | +0.8 | 168 |
| II—(5) | 2.5 | 0.4 | 55.7 (700) | +2.0 | +1.2 | 170 |

From the contents of Table 2, even in the case of Co-adsorbed-$\gamma$-Fe$_2$O$_3$ magnetic powder, it is needless to say that the form anisotropy becomes smaller when the acicular ratio is not higher than 1.3, and it is found that they are not preferred to be a magnetic recording medium because the magnetic powder is apt to be snapped off and the Hc is distributed to cause an image transfer trouble, when the acicular ratio thereof is not lower than 4.5.

The above pointed out natures are common not only to Fe type alloy magnetic powder and Co-adsorbed-$\gamma$-Fe$_2$O$_3$ magnetic powder but also to the other metal type ferromagnetic powder and the other Co-adsorbed iron oxide.

Example 6

With the purpose of investigating the durability of still images of Sample Video Tapes II—(2) and II—(4) which were obtained in Examples 2 and 4, the changes on standing of the still images thereof were measured by means of a video deck, NV—6200, mfd. by Matsushita Electric Industrial Co., Ltd., Japan. On the other hand, the measurements were made on the Sample Video Tape II—(0) obtained, as a control sample, in Control Example. The results thereof are shown in Table 3 below.

TABLE 3

| Characteristics / Sample No. | Results of Measurements |
|---|---|
| (Invention) II—(2) | Excellent still images were displayed even after a lapse of over four hours. |
| (Invention) II—(4) | ditto |
| (Control) II—(0) | Images almost disappeared after a lapse of one hour. |

It is believed that the terms "VAGH", "Estane", "Colonate", "Glossmeter GL—26D" and "Video deck NV—6299" are Registered Trade Marks in one or more of the designated states.

## Claims

1. A magnetic recording medium which comprises, on a support, a magnetic layer containing ferromagnetic powder comprising ferromagnetic iron oxide particles characterised in that the iron oxide particles possess a surface layer with cobalt adsorbed thereon, the average grain size of said particles being not more than 0.5 μm, the ratio of the major axis to the minor axis (acicular ratio) Ra and the coercive force Hc thereof satisfying the following formulae:

$$1.3 \leqq Ra \leqq 4.5, \text{ and}$$

$$43.8 \leqq Hc \leqq 63.7 \text{ kA/m } (550 \leqq Hc \leqq 800 \text{ Oe})$$

2. A magnetic recording medium according to claim 1, wherein the cobalt is adsorbed on the surface layer after formation of said iron oxide particles.

3. A magnetic recording medium according to claim 1 or 2, wherein said iron oxide particles are $\gamma\text{-}Fe_2O_3$ particles having a surface layer with cobalt adsorbed thereon.

4. A magnetic recording medium according to any one of claims 1 to 3, wherein the amount of the cobalt adsorbed is 0.5 to 30 parts by weight per 100 parts by weight of said cobalt-adsorbed-iron oxide.

5. A magnetic recording medium according to claim 4, wherein the amount of the cobalt adsorbed is 2.5 to 30 parts by weight per 100 parts by weight of said cobalt-adsorbed-iron oxide.

6. A magnetic recording medium according to any one of the preceding claims, wherein said magnetic layer contains a binder.

7. A magnetic recording medium according to claim 6, wherein said binder is present in said magnetic layer in an amount from 5 to 400 parts by weight per 100 parts by weight of said ferromagnetic powder.

8. A magnetic recording medium according to claim 7, wherein said binder is present in said magnetic layer in an amount from 10 to 100 parts by weight per 100 parts by weight of said ferromagnetic powder.

9. A magnetic recording medium according to any one of the preceding claims, wherein said binder is a thermoplastic resin, thermosetting resin, radiation curable resin, reactive resin, electron-irradiation-setting resin or any mixture thereof.

10. A magnetic recording medium according to any one of the preceding claims, wherein said support is a polymeric resin, non-magnetic metal or a ceramic.

11. A magnetic recording medium according to claim 10, wherein said polymeric resin is a polyester, polyolefin, cellulose derivative, polycarbonate, polyvinylchloride, polyimide or nylon.

12. A magnetic recording medium according to claim 10, wherein said support is a non-magnetic metal support of aluminium, zinc or an alloy thereof.

13. A magnetic recording medium according to any one of the preceding claims wherein said support is in the form of film or sheet, card, disc or cylindrical drum.

14. A magnetic recording medium according to any one of the preceding claims, wherein said average grain size of said ferromagnetic particles is from 0.05 μm to 0.5 μm.

15. A magnetic recording medium according to claim 14, wherein said average grain size of said ferromagnetic particles is from 0.1 μm to 0.3 μm.

## Patentansprüche

1. Magnetisches Aufzeichnungsmedium mit einer ferromagnetisches Pulver, das ferromagnetische Eisenoxidpartikel umfaßt, enthaltenden magnetischen Schicht auf einem Träger, dadurch gekennzeichnet, daß die Eisenoxidpartikel ein Oberflächenschicht mit an dieser adsorbiertem Kobalt besitzen, daß die mittlere Korngröße dieser Partikel nicht größer als 0,5 μm ist und daß das Verhältnis der größeren Achse zur kleineren Achse (Nadelverhältnis) Ra sowie die Koerzitivkraft Hc der Partikel die folgende Formel erfüllen:

$$1,3 \leqq Ra \leqq 4,5, \text{ and}$$

$$43,8 \leqq Hc \leqq 63,7 \text{ kA/m } (550 \leqq Hc \leqq 800 \text{ Oe}).$$

2. Magnetisches Aufzeichnungsmedium nach Anspruch 1, dadurch gekennzeichnet, daß das Kobalt an der Oberflächenschicht nach der Bildung der Eisenoxidpartikel adsorbiert wurde.

3. Magnetisches Aufzeichnungsmedium nach Anspruch 1 oder 2, dadurch gekennzeichnet, daß die Eisenoxidpartikel $\gamma\text{-}Fe_2O_3$-Partikel mit einer Oberflächenschicht, an der Kobalt adsorbiert ist, sind.

4. Magnetisches Aufzeichnungsmedium nach Anspruch 3, dadurch gekennzeichnet, daß die Menge des adsorbierten Kobalts 0,5 bis 30 Masseteile pro 100 Masseteile des kobaltadsorbierten Eisenoxids beträgt.

5. Magnetisches Aufzeichnungsmedium nach Anspruch 4, dadurch gekennzeichnet, daß die Menge des adsorbierten Kobalts 2,5 bis 30 Masseteile pro 100 Masseteile des kobaltadsorbierten Eisenoxids beträgt.

6. Magnetisches Aufzeichnungsmedium nach einem der vorhergehenden Ansprüche, dadurch gekennzeichnet, daß die magnetischen Schicht ein Bindemittel enthält.

7. Magnetisches Aufzeichnungsmedium nach Anspruch 6, dadurch gekennzeichnet, daß das Bindemittel in der magnetischen Schicht in einer Menge von 5 bis 400 Masseteilen pro 100 Masseteile des ferromagnetischen Pulvers vorhanden ist.

8. Magnetisches Aufzeichnungsmedium nach Anspruch 6, dadurch gekennzeichnet, daß der Träger ein unmagnetischer Metallträger aus Aluminium, Zink oder einer Legierung dieser ist.

9. Magnetisches Aufzeichnungsmedium nach einem der vorhergehenden Ansprüche, dadurch gekennzeichnet, daß der Träger die Gestalt einer Folie, eines Blatts, einer Karte, einer Scheibe oder einer zylindrischen Trommel hat.

10. Magnetisches Aufzeichnungsmedium nach einem der vorhergehenden Ansprüche, dadurch gekennzeichnet, daß die mittlere Korngröße der ferromagnetischen Partikel von 0,05 µm bis 0,5 µm beträgt.

11. Magnetisches Aufzeichnungsmedium nach Anspruch 10, dadurch gekennzeichnet, daß die mittlere Korngröße der ferromagnetischen Partikel von 0,1 µm bis 0,3 µm beträgt.

12. Magnetisches Aufzeichnungsmedium nach Anspruch 10, dadurch gekennzeichnet, daß der Träger ein nicht-magnetischer Metallträger aus Aluminium, Zink oder einer Legierung hiervon ist.

13. Magnetisches Aufzeichnungsmedium nach einem der vorhergehenden Ansprüche, dadurch gekennzeichnet, daß der Träger in Form eines Films bzw. Blattes, einer Karte, einer Scheibe oder in Form einer zylindrischen Trommel vorliegt.

14. Magnetisches Aufzeichnungsmedium nach einem der vorhergehenden Ansprüche, dadurch gekennzeichnet, daß die Durchschnittskorngröße der ferromagnetischen Partikel im Bereich von 0,05 µm bis 0,5 µm beträgt.

15. Magnetisches Aufzeichnungsmedium nach Anspruch 14, dadurch gekennzeichnet, daß die Durchschnittskorngröße der ferromagnetischen Partikel im Bereich von 0,1 µm bis 0,3 µm liegt.

**Revendications**

1. Moyen d'enregistrement magnétique comprenant, sur un support, une couche magnétique contenant une poudre ferromagnétique, comprenant des particules d'oxyde de fer ferromagnétique, caractérise en ce que les particules d'oxyde de fer présentent une couche superficielle sur laquelle est adsorbé du cobalt, la dimension moyenne des dites particules n'étant pas supérieure à 0,5µm, le rapport du grand axe au second axe (rapport aciculaire (Ra et sa force coercitive Hc répondant aux formules suivantes:

$$1,3 \leqq Ra \leqq 4,5, \text{ and}$$

$$43,8 \leqq Hc \leqq 63,7 \text{ kA/m } (550 \leqq Hc \leqq 800 \text{ Oe})$$

2. Moyen d'enregistrement magnétique selon la revendication 1, dans lequel le cobalt a été adsorbé sur la couche superficielle apres la formation des dits particules d'oxyde de fer.

3. Moyen d'enregistrement magnétique selon la revendication 1 ou 2, dans lequel les dites particules d'oxyde de fer sont des particules γ-Fe$_2$O$_3$ ayant une couche superficielle sur laquelle est adsorbé du cobalt.

4. Moyen d'enregistrement magnétique selon la revendication 3, dans lequel la proportion de cobalt adsorbé est de 0,5 à 30 parties en poids pour 100 parties en poids du dit oxyde de fer-cobalt adsorbé.

5. Moyen d'enregistrement magnétique selon la revendication 4, dans lequel la proportion de cobalt adsorbé est de 2,5 à 30 parties en poids pour 100 parties en poids du dit oxyde de fer-cobalt adsorbé.

6. Moyen d'enregistrement magnétique selon l'une quelconque des revendications précédentes, dans lequel la couche magnétique contient un liant.

7. Moyen d'enregistrement magnétique selon la revendication 6, dans lequel le liant est présent dans la couche magnétique dans une proportion de 5 à 400 parties en poids pour 100 parties en poids de la dite poudre ferromagnétique.

8. Moyen d'enregistrement magnétique selon la revendication 6, dans lequel ledit support est un support en metal non magnétique, d'aluminium, de zinc ou d'un de leurs alliages.

9. Moyen d'enregistrement magnétique selon l'une quelconque des revendications prédédentes, dans lequel le support a la forme d'un film ou d'une feuille, d'une carte, d'un disque ou d'un tambour cylindrique.

10. Moyen d'enregistrement magnétique selon l'une quelconque des revendications précédentes, dans lequel la dimension moyenne des particules ferromagnétiques est de 0,05µm à 0,5µm.

11. Moyen d'enregistrement magnétique selon la revendication 10, dans lequel la dimension moyenne des particules ferromagnétiques est de 0,1µm à 0,3µm.

12. Moyen d'enregistrement magnétique selon la revendication 10, dans lequel ledit support est un support métallique non magnétique d'aluminium, de zinc ou d'un alliage de ceux-ci.

13. Moyen d'enregistrement magnétique selon l'une quelconque des revendications prédédentes, dans lequel ledit support est sous la forme d'un film ou d'une feuille, d'une carte, d'un disque ou d'un tambour cylindrique.

14. Moyen d'enregistrement magnétique selon l'une quelconque des revendications précédentes, dans lequel la taille moyenne desdites particules ferromagnétiques est de 0,05µm à 0,5µm.

15. Moyen d'enregistrement magnétique selon la revendication 14, dans lequel la taille moyenne desdites particules ferromagnétiques est de 0,1µm à 0,3µm.